# EUROPÄISCHE PATENTSCHRIFT

(11) **EP 0 652 098 B1**
(45) Veröffentlichungstag und Bekanntmachung des Hinweises auf die Patenterteilung: **16.12.1998**
(21) Anmeldenummer: 94116060.8
(22) Anmeldetag: 12.10.1994
(51) Int. Cl.: B29C 47/68, B01D 29/11, B01D 29/52, B01D 35/18, D01D 1/10

(54) **Verfahren zur Polymerschmelzefiltration**
Process for filtration of polymer melts
Procédé pour filtration de polymères fondus

(30) Priorität: 08.11.1993 DE 4338129
(43) Veröffentlichungstag der Anmeldung: 10.05.1995
(73) Patentinhaber: Zimmer Aktiengesellschaft, D-60388 Frankfurt (DE)
(72) Erfinder: Tersi, Paul, D-63674 Altenstadt (DE); Briegel, Wolfgang, D-63454 Hanau (DE); Cermak, Dieter, D-61381 Freidrichsdorf (DE); Schulze, Michael, D-63073 Offenbach/Main (DE)

(56) Entgegenhaltungen:
- DE-A- 4 303 427
- FR-A- 2 111 117
- US-A- 3 598 242
- US-A- 4 191 648
- US-A- 4 921 607

## Beschreibung

Die Erfindung bezieht sich auf ein Verfahren zur Polymerschmelzefiltration unter Verwendung von Filterkerzen.

Ein Verfahren dieser Art ist beispiels weise aus der US-A-4 191 648 bekannt.

Steigende Anforderungen an die Qualität von Polymerprodukten, wie Fasern, Folien, aber auch Granulat aus linearen Polyestern, Polycarbonaten, Polyamiden oder Polyolefinen, haben die Feinstfiltration der Polymerschmelze nach Austritt aus dem letzten Synthesereaktor bzw. Abscheider und vor Eintritt in das Weiterverarbeitungsaggregat zu einer notwendigen Prozeßstufe werden lassen.

Für diese Filtration werden bekannterweise zylindrische Filterelemente, sogenannte Filterkerzen, aus gefalteten, flexiblen Materialien, wie Metalldrahtgewebe und Metallfaservliese, mit einer Filterfeinheit von je nach Verwendung des Polymers 5 bis 150 µm eingesetzt. Das Enddruckgefälle der Filterkerzen liegt hierbei größenordnungsmäßig bei 50 bis 150 bar. Der Durchsatz großtechnischer Anlagen erfordert eine Vielzahl von Filterkerzen, die in einer Filterplatte gehalten, zu Filterpaketen zusammengefaßt sind. Die Filterpakete werden in druckfeste und daher entsprechend dickwandige Gefäße eingesetzt. Die zu filtrierende Polymerschmelze wird in das Druckgefäß gepumpt und tritt nach dem Passieren der porösen Wandung der Filterkerzen an der Filterplatte wieder aus. Zur Aufrechterhaltung der Schmelzetemperatur von polymerabhängig über 180 °C bis etwa 350 °C wird das Druckgefäß paßgenau in ein zweites Gefäß, dessen Wandungen von Wärmetauscherflüssigkeit durchflossen sind, eingesetzt (Chemiefasern/Textilindustrie (Nov. 1989) Seiten 1171-74 sowie Filtration & Separation, Vol. 26/1 (Jan./Febr. 1989) Seiten 43 - 45).

Die heutigen hohen Qualitätsansprüche an die Polymerprodukte, insbesondere beim Direktspinnen, setzen eine gleichmäßige Verweilzeit der Gesamtpolymerschmelze, bzw. eine gleichmäßige Durchströmung ohne tote Zonen und eine gleichmäßige, konstant gleiche Temperatur in der Filtrationsstufe voraus.

Bei den zuvor beschriebenen, bekannten Polymerschmelzefiltrationssystemen ist jedoch eine gleichmäßige Durchströmung nicht gewährleistet, da das Druckgefälle längs der Filterkerzen und der Abstand zwischen Filterkerze und benachbarter Wandung von einer Filterkerze zur nächsten unterschiedlich sind. Insbesondere ist die Strömung unmittelbar unterhalb der Filterplatte minimal mit der Folge thermischer Schädigung des Polymers bis hin zu vercrackten Produkten. Durch Einbau von Leitflächen läßt sich die Hauptströmung beeinflussen, nicht aber die toten Zonen, die eher zunehmen.

Auch ist eine gleichmäßige Temperierung der Gesamtschmelze bei den bekannten Systemen problematisch, da die Wärmeübertragung durch die dicken Wandungen des Druckgefäßes und zusätzlich durch den über den Umfang ungleichmäßigen, kleinen Luftspalt zwischen Druckgefäß und Heizgefäß behindert wird. Zwischen Gefäßmitte und Gefäßwandung sowie längs der Wandung treten unterschiedliche Temperaturen auf, was u. a. Unterschiede in der Viskosität und somit in der Verweilzeit des Polymers bedingt. Durch Druckdifferenzen in der Schmelze erzeugte Temperaturerhöhungen lassen sich nur unzureichend ausgleichen.

Es ist ferner bekannt, die Temperatur des Polymers im Verarbeitungsaggregat unabhängig von der Temperatur des letzten Synthesereaktors unter Zwischenschaltung eines zusätzlichen Wärmetauschers,z. B. eines Rohrbündelwärmetauschers, zu führen.

Aufgabe der vorliegenden Erfindung ist daher, die bekannten Verfahren zur Polymerschmelzefiltration so abzuwandeln, daß die zuvor genannten Nachteile nicht oder zumindest in geringerem Umfang auftreten.

Insbesondere soll das Verfahren unter Beibehaltung der Wirtschaftlichkeit eine gleichmäßige Verweilzeit ohne tote Zonen und eine gleichmäßige, gezielte Temperierung der Polymerschmelze gewährleisten.

Die Lösung dieser Aufgabe erfolgt erfindungsgemäß durch ein Verfahren gemäß Patentanspruch 1. Zweckmäßige Weiterbildungen der Erfindung sind in den abhängigen Ansprüchen beschrieben. Wesentliches Element des erfindungsgemäßen Verfahrens ist eine neuartige Filtrationsvorrichtung, welche im wesentlichen aus einem Rohrbündelwärmetauscher mit in jedem Wärmetauscherrohr je einer, unter Ausbildung eines Ringspaltes, lösbar eingesetzten Filterkerze sowie Kanälen für Polymerschmelzenebenströme besteht.

Ein Rohrbündelwärmetauscher ist ein durch zwei horizontale Rohrplatten in eine kleine untere Produktverteilerkammer, eine große mittlere Kammer und eine kleine obere Produktsammelkammer unterteiltes, geschlossenes, zylindrisches Gefäß mit einer Vielzahl von vertikalen, in der mittleren Kammerer zwischen den beiden Rohrplatten angeordneten, von Wärmeträgerflüssigkeit umspülten, an beiden Enden offenen Wärmetauscherrohren. In jedes Wärmetauscherrohr ist unter Ausbildung eines konzentrischen, äußeren Ringspaltes je eine an ihrem unteren Ende geschlossene und an ihrem in die Sammelkammer mündenden oberen Ende offene Filterkerze über eine lösbare Verbindung am oberen Ende eingesetzt. Zwischen Ringspalt und Sammelkammer sind im peripheren Bereich der lösbaren Verbindung eine Mehrzahl von symmetrisch verteilten, engen Kanälen angeordnet.

Der zu filtrierende Polymerschmelzestrom wird von unten in die Verteilerkammer und danach in den Ringspalt der Wärmetauscherrohre eingeführt. Der Hauptstrom fließt radial durch die poröse Wandung der Filterkerzen und anschließend in die Sammelkammer. Ein Nebenstrom, entsprechend 0,03 bis 3,0 Gew.-% des Gesamtstromes, fließt vom Ringspalt durch die Kanäle direkt in die Sammelkammer, wodurch die Ausbildung strömungsarmer Zonen im Ringspalt verhindert wird. Haupt-und Nebenströme werden in der Sammelkammer vereinigt und treten letztlich oben aus der Filtrationsvorrichtung aus. Vorzugsweise enthalten die Kanäle ein Filtermedium und verlaufen im Austrittsbereich in der Sammelkammer parallel zur Rohrplatte und bezogen auf die Rohrachse nach außen hin orientiert. Die Filtrationsvorrichtung kann so betrieben werden, daß die Austrittstemperatur der Polymerschmelze im wesentlichen gleich oder verschieden von der Eintrittstemperatur ist.

Durch Eliminierung von toten Zonen und durch Sicherstellung einer sehr gleichmäßigen, gezielten Temperierung wird eine sehr gleichmäßige Verweilzeit sämtlicher Schmelzeteilchen innerhalb der Filtrationsvorrichtung erzielt. Ein Austausch einer jeden einzelnen Filterkerze ist möglich, ohne daß die gesamte Vorrichtung abgekühlt werden muß und ohne Herausheben des gesamten Filterkerzenpaketes.

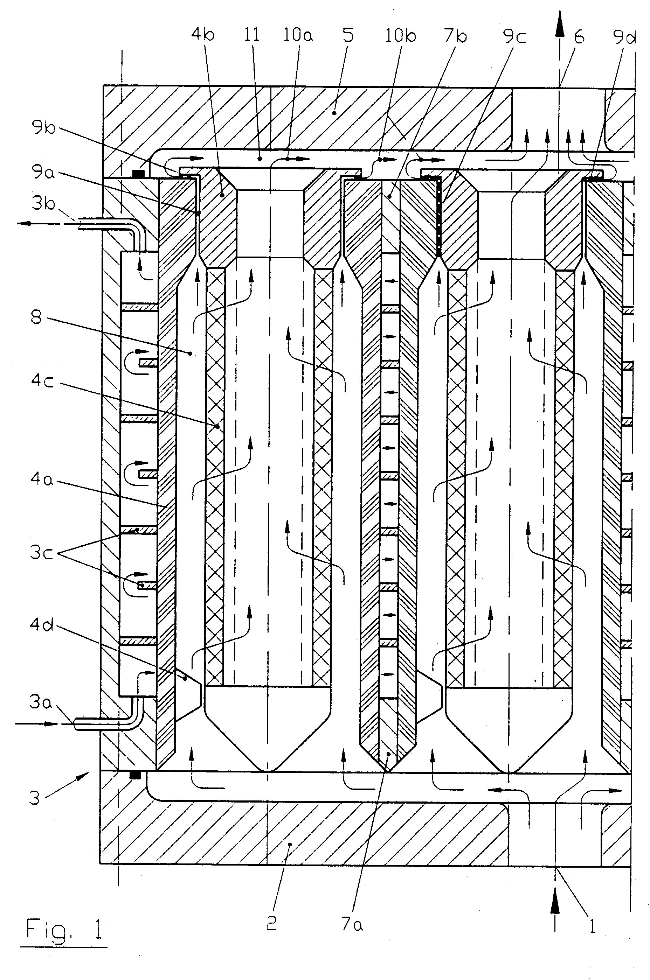

Nachfolgend wird die Erfindung unter Bezug auf Fig. 1 näher erörtert, wobei Fig. 1 schematisch einen Längsschnitt einer bevorzugten Ausführungsform der bei dem erfindungsgemäßen Verfahren verwendeten Filtrationsvorrichtung wiedergibt. Um die Details der Erfindung deutlich zeigen zu können, sind statt der in Wirklichkeit vorhandenen Vielzahl von Filterkerzen nur zwei Filterkerzen mit gegenüber den sonstigen Abmessungen stark vergrößertem Durchmesser dargestellt.

Die Polymerschmelze wird von unten (1) in die von Wärmeträgerflüssigkeit (3a, 3b) umspülten Rohre (4a) des Rohrbündelwärmetauschers (3) gepumpt, wobei der Eintrittsbereich zwischen Wärmetauscherboden (2) und unterer Rohrplatte (7a) so gestaltet sein sollte, daß eine möglichst gleichmäßige Verteilung der Schmelze auf alle Rohre gesichert ist.

In Abweichung von konventionellen Rohrbündelwärmetauschern ist erfindungsgemäß in jedes Wärmetauscherrohr (4a) eine Filterkerze (4c) mit einer lösbaren Verbindung (4b) am oberen Ende, konzentrisch, unter Ausbildung eines äußeren Ringspaltes (8) eingesetzt. Handelsübliche Filterkerzen, wie sie auch bei Filtrationsverfahren nach dem Stand der Technik verwendet werden, beispielsweise aus gefalteten Metalldrahtgitter mit einer Einlage aus gefalteten Metallfaservlies sind verwendbar. Die Filterkerzen (4c) sollten bis nahe an das untere Ende der Wärmetauscherrohre (4a) reichen, ihre Länge also im Bereich von 95 bis 100 % der Rohrlänge liegen. Der äußere Durchmesser der Filterkerzen ist üblicherweise über die gesamte Länge konstant, so daß zwischen Filterkerze (4c) und Rohr (4a) ein Ringspalt (8) mit konstanter Spaltbreite gebildet wird. Die Spaltbreite ist so zu bemessen, daß der durch den Ringspalt (8) verursachte Druckverlust im Verhältnis zu dem durch das Filtermedium (4c) bedingten minimal ist. Je nach Kerzendurchmesser beträgt die Spaltbreite 5 bis 20 mm. Die Verwendung von Filterkerzen (4c) mit nach unten leicht abnehmendem Durchmesser ist möglich. In diesem Fall nimmt die Spaltbreite nach unten hin entsprechend zu. Durch den Ringspalt mit definierter Spaltbreite werden konstante, für alle Filterkerzen gleiche Anströmbedingungen erzielt.

Am oberen Ende tragen die Filterkerzen (4c) ein Verbindungsstück (4b) mit Außengewinde und die Wärmetauscherrohre (4a) ein entsprechendes Innengewinde. Die Verbindung zwischen Filterkerzen (4c) und Wärmetauscherrohren (4a) kann auch auf andere Weise, zum Beispiel über ein bajonettartig unterbrochenes Gewinde oder über in Nuten greifende Bolzen erfolgen, muß aber da die Filterkerzen (4c) des öfteren zur Reinigung herausgenommen werden müssen, leicht lösbar sein. Vorzugsweise sind die Verbindungsstücke (4b) im oberen Randbereich breiter und reichen über den Innendurchmesser der Wärmetauscherrohre (4a) hinaus, wobei sie auf der oberen Rohrplatte (7b) bzw. der Stirnseite der Rohre (4a) über eine Ringdichtung aufliegen. Im unteren Rohrbereich kann zusätzlich eine Zentrierhalterung (4d), beispielsweise aus drei symmetrisch angeordneten Stiften oder Bügeln angebracht sein.

Des weiteren weist erfindungsgemäß jedes der Wärmetauscherrohre (4a) mit eingesetzter Filterkerze (4c) in Höhe des Verbindungsstückes (4b), im peripheren Bereich, mehrere symmetrisch verteilte Verbindungskanäle (9a) zwischen dem Ringspalt (8) und der oberen Fläche der oberen Rohrplatte (7b) auf. Diese Kanäle sind vorzugsweise als Nuten oder Bohrungen des Verbindungsstückes (4b) ausgebildet, können aber auch ganz oder teilweise in der Rohrwandung (4a) liegen. Bevorzugt verlaufen die Kanäle (9a) im Rohrplattenaustrittsbereich parallel (9b) zur Rohrplatte (7b) und bezogen auf die Rohrachse nach außen orientiert. Desweiteren enthalten die Kanäle (9a, 9b) vorzugsweise ein Filtermedium, beispielsweise ein Metallfaservlies oder ein poröses Metall. Hierzu wird bevorzugt die zuvor erwähnte Ringdichtung als Filter (9d) ausgebildet; das Filtermedium kann aber auch den gesamten Kanal ausfüllen (9c).

Der Querschnitt dieser Kanäle (9a, 9b) ist so bemessen, daß der Hauptstrom (10a) der von unten in die Rohre (4a) eintretenden Schmelze nach Durchtritt durch die Filterkerzen (4c) im axialen Bereich der Rohre bzw. Kerzen und ein Nebenstrom (10b), entsprechend etwa 0,03 bis 3,0 Gew.-%, bevorzugt 0,1 bis 1,0 Gew.-% des Gesamtstromes, ohne Durchtritt durch die Filterkerzen, durch die Kanäle (9a, 9b) im peripheren Bereich der Rohre oben wieder austritt. Die Nebenstrom-Menge (10b) ist so gering, daß ein Filtrieren dieses Polymerschmelze-Anteiles nicht unbedingt erforderlich ist. Bei der bevorzugten Ausführung mit einem Filtermedium (9c, 9d) in den Kanälen erfährt aber auch dieser Anteil eine Filtration.

Die aus den Wärmetauscherrohren (4a) austretenden Haupt- und Nebenströme (10a, 10b) werden in einer unmittelbar an die obere Rohrplatte (7b) anschließenden Sammelkammer (11) vereinigt und die filtrierte Polymerschmelze schließlich über eine Austrittsöffnung (6) der Sammelkammer ausgetragen.

Die Sammelkammer (11) kann auch - in Fig. 1 nicht dargestellte - Einbauten (Leitbleche) enthalten, welche die aus den Rohren austretenden Ströme (10a, 10b) vor Erreichen der Austrittsöffnung (6) zunächst in Richtung der Peripherie der Sammelkammer (11) umlenken. Diese Maßnahme führt zu einer gleichmäßigeren Durchströmung sämtlicher Bereiche der Sammelkammer.

Die Schmelze-Nebenströme (10b) verhindern das Auftreten toter Zonen mit stagnierender Polymerschmelze. So fließt ständig Polymerschmelze auch im obersten Ringspaltbereich und innerhalb der Sammelkammer (11) im peripheren Bereich der Verbindungsstücke (4b).

Zur Vermeidung strömungsarmer Zonen in der Sammelkammer (11) im Bereich zwischen den Rohren (4a) sind die Wärmetauscherrohre (4a) in geometrischer dichtest möglicher Packung mit gleichmäßigen, zur Umspülung mit Wärmeträgerf lüssigkeit ausreichenden Abständen zueinander angeordnet. Diese Anordnung ermöglicht eine ausreichende Spülung der Rohrzwischenbereiche durch die Schmelze-Nebenströme (10b).

Die Temperatur der zu filtrierenden Polymerschmelze liegt im allgemeinen 10 bis 50 °C über der Schmelztemperatur des Polymers, also je nach Polymer bei etwa 180 °C bis über 330 °C.

Die Temperierung der schmelzeführenden Apparateteile erfolgt über einen oder mehrere Wärmeträgerflüssigkeits-Kreisläufe, wobei der obere und untere Deckel (5 und 2) auch elektrisch beheizt sein können (nicht dargestellt).

Die verfahrenswesentlichen Wärmetauscherrohre (4a) mit eingesetzter Filterkerze (4c) sind in direktem Kontakt mit der Wärmeträgerflüssigkeit, die unten bei (3a) eintritt und nach mehrmaliger horizontaler Umlenkung (3c) bei (3b) oben wieder austritt. Im Vergleich zu dem Durchmesser des bei bekannten Verfahren verwendeten Druckgefäßes ist der Durchmesser der einzelnen Wärmetauscherrohre sehr gering, und somit der Einsatz dünnwandiger Rohre mit ausgezeichnetem Wärmeübergang möglich. Um eventuelle Bereiche erhöhter Schmelzeviskosität mit der Folge geringerer Strömungsgeschwindigkeit bis hin zu örtlichen Polymerablagerungen an der Wandung (4a) auszuschließen, muß die Strömungsgeschwindigkeit der Wärmeträgerflüssigkeit so hoch eingestellt werden, daß Eintritts- und Austritts-Temperatur der Wärmeträgerflüssigkeit nahezu gleich sind (± 1° C).

Je nach vor- und nachgeschalteten Prozeßstufen ist die Austrittstemperatur der Polymerschmelze gleich der Eintrittstemperatur der Schmelze oder weicht von dieser nach oben oder nach unten deutlich ab. Bei Temperaturgleichheit, was im Rahmen der Meßgenauigkeit ± 1 °C bedeutet, sollte die Temperaturdifferenz zwischen Polymerschmelze und Wärmeträgerflüssigkeit möglichst gering sein, daß heißt im Bereich von 1 bis 5 °C liegen.

Eine höhere Temperaturdifferenz im Bereich von 5 bis 20 °C ist erforderlich, wenn die Austrittstemperatur der Polymerschmelze von der Eintrittstemperatur abweicht, normalerweise um 2 bis 10 °C. In diesem Fall ist die erfindungsgemäß verwendete Filtrationsvorrichtung besonders vorteilhaft, da anders als bei bekannten Prozessen, die sowohl einen kompletten Wärmetauscher als auch eine komplette Filtrationsapparatur benötigen, bei dem Verfahren der Erfindung eine einzige Vorrichtung, die die Funktion beider Apparate in sich vereinigt, genügt.

Das erfindungsgemäße Verfahren ist geeignet zur Filtration jeglicher Polymerschmelzen unter der Voraussetzung, daß die Strömungsgeschwindigkeit der Polymerschmelze zwischen Eintritt in und Austritt aus der Filtrationsvorrichtung ausreichend hoch ist, um eine thermische Schädigung des Polymers auszuschließen. Als Polymere kommen Polyamide, Polycarbonate, Polyolefine und lineare Polyester, insbesondere Ethylenterephthalat-Homo- und -Copolymere in Betracht. Vorzugsweise erfolgt die Filtration der Polymerschmelze nach Austritt aus dem letzten Synthesereaktor bzw. Abscheider und vor Eintritt in das Weiterverarbeitungsaggregat. Der Einsatz in einer früheren Prozeßstufe ist möglich, aber wirtschaftlich wenig zweckmäßig. Bevorzugt wird die Erfindung bei Polymersyntheseverfahren mit direkt nachgeschalteter Faserspinnerei angewandt.

Das erfindungsgemäße Verfahren ermöglicht die Filtration von Polymerschmelzen unter Sicherstellung einer für die heutigen Qualitätsansprüche unerläßlichen gleichmäßigen Verweilzeit und einer sehr gleichmäßigen, konstant gleichen Temperatur der gesamten Polymerschmelze. Dies wird erreicht durch Führung der Polymerschmelze in Rohren, die die Filterkerzen konzentrisch, mit definiertem Ringspalt umgeben, durch gezielte Polymernebenströme zur Spülung toter Zonen und durch verbesserte Wärmeübertragung durch Integrierung der Filtrationsvorrichtung in einen Rohrbündelwärmetauscher.

Durch die homogene Durchströmung und die sehr gleichmäßige Temperierung werden sowohl die thermische Schädigung des Polymers als auch die Polymerablagerungen im Filtergehäuse und in den Filterkerzen reduziert. Dadurch verlängert sich die Laufzeit zwischen zwei Reinigungszyklen um mindestens 50 %. Auch wird die Reinigung der Filterkerzen deutlich vereinfacht, da nach Abnahme des oberen Deckels jede Filterkerze einzeln herausgenommen und durch eine saubere ersetzt werden kann, ohne daß das gesamte Filtrations-System abgekühlt werden müßte. Bei den eingangs geschilderten, bekannten Verfahren muß hingegen das gesamte System zunächst abgekühlt werden, dann die sehr schwere Filterplatte mit sämtlichen Filterkerzen herausgehoben und nach Austausch der Kerzen wieder eingesetzt und das gesamte System wieder erwärmt.

Ferner ist gleichzeitig eine gezielte Einstellung einer, bezogen auf die Eintrittstemperatur, höheren oder niedrigeren Austrittstemperatur der Polymerschmelze ohne Einsatz eines zusätzlichen Wärmetauschers möglich.

## Patentansprüche

1. Verfahren zur Polymerschmelzefiltration unter Verwendung von Filterkerzen, dadurch gekennzeichnet, daß die Polymerschmelze von unten in die von Wärmeträgerflüssigkeit (3a,3b) umspülten Rohre (4a) eines Rohrbündelwärmetauschers (3) gepumpt wird, wobei in jedes Wärmetauscherrohr (4a) eine Filterkerze (4c) mit einer lösbaren Verbindung (4b) am oberen Ende konzentrisch, unter Ausbildung eines äußeren Ringspaltes (8) derart eingesetzt ist, daß der Hauptstrom (10a) der Polymerschmelze nach Durchtritt durch die Filterkerzen (4c) und ein Nebenstrom (10b), entsprechend etwa 0,03 bis 3,0 Gew. -% des Gesamtstromes, ohne Durchtritt durch die Filterkerzen (4c) oben aus den Wärmetauscherrohren (4a) austritt, und diese Ströme in einer unmittelbar an die obere Rohrplatte (7b) anschließenden Sammelkammer (11) vereinigt werden, und danach die Polymerschmelze aus der Sammelkammer (11) über eine Austrittsöffnung (6) ausgetragen wird.

2. Verfahren gemäß Anspruch 1, dadurch gekennzeichnet, daß die lösbaren Verbindungen (4b) der Filterkerzen (4c) im peripheren Bereich Kanäle (9a,9b) für den Austritt der Nebenströme (10b) aufweisen.

3. Verfahren gemäß Anspruch 2, dadurch gekennzeichnet, daß die Kanäle (9a,9b) im Austrittsbereich in der Sammelkammer (11) parallel zur Rohrplatte (7b) und bezogen auf die Rohrachse nach außen orientiert verlaufen.

4. Verfahren gemäß einem der Ansprüche 2 oder 3 dadurch gekennzeichnet, daß die Kanäle (9a,9b) ein Filtermedium enthalten.

5. Verfahren gemäß einem der Ansprüche 1 bis 4, dadurch gekennzeichnet, daß die Länge der Filterkerzen (4c) gleich 95 bis 100 % der Länge der Wärmetauscherrohre (4a) beträgt und die Spaltbreite des Ringspaltes (8) zwischen Filterkerze (4c) und Rohr (4a) im Bereich von 5 bis 20 mm liegt.

6. Verfahren gemäß einem der Ansprüche 1 bis 5, dadurch gekennzeichnet, daß die Wärmetauscherrohre (4a) in geometrisch dichtest möglicher Packung mit gleichmäßigen, zur Umspülung mit Wärmeträgerflüssigkeit (3a,3b) ausreichenden Abständen zueinander angeordnet sind.

7. Verfahren gemäß einem der Ansprüche 1 bis 6, dadurch gekennzeichnet, daß die Sammelkammer (11) Einbauten enthält, welche die aus den Wärmetauscherrohren (4a) austretenden Ströme vor Erreichen der Austrittsöffnung (6) zunächst in Richtung der Peripherie der Sammelkammer (11) umlenken.

8. Verfahren gemäß einem der Ansprüche 1 bis 7, dadurch gekennzeichnet, daß die Temperaturdifferenz zwischen Wärmeträgerflüssigkeit (3a,3b) und Polymerschmelze 1 bis 5 °C beträgt und die Austrittstemperatur der Polymerschmelze gleich der Eintrittstemperatur ± 1 °C ist.

9. Verfahren gemäß einem der Ansprüche 1 bis 7, dadurch gekennzeichnet, daß die Temperaturdifferenz zwischen Wärmeträgerflüssigkeit (3a,3b) und Polymerschmelze 5 bis 20 °C beträgt und die Austrittstemperatur der Polymerschmelze um 2 bis 10 °C von der Eintrittstemperatur der Polymerschmelze abweicht.

10. Verfahren gemäß einem der Ansprüche 1 bis 9, dadurch gekennzeichnet, daß die Polymerschmelze eine Ethylenterephthalat-Homo- oder -Copolymerschmelze ist.

## Claims

1. A process for the filtration of polymer melts using filter cartridges,
**characterised in that** the polymer melt is pumped from below into the tubes (4a) of a tubular heat exchanger (3) around which heat carrier fluid is flushed, wherein a filter cartridge (4c) having a detachable connection (4b) at the upper end is inserted concentrically into each heat exchanger tube (4a), with the formation of an outer annular gap (8), in such a manner that, after passing through the filter cartridges (4c), the main flow (10a) of the polymer melt and a bypass flow (10b), corresponding roughly 0.03 to 3.0 % by weight of the entire flow, without passing through the filter cartridges (4c), discharges at the top from the heat exchanger tubes (4a), and these flows are combined in a collection chamber (11) directly connected to the upper tubular sheet (7b), and afterwards the polymer melt is discharged from the collection chamber (11) via an outlet aperture (6).

2. A process according to Claim 1,
**characterised in that** the detachable connections (4b) of the filter cartridges (4c) comprise ducts (9a, 9b) for the outlet of the bypass flows in the peripheral region.

3. A process according to Claim 2,
**characterised in that** the ducts (9a, 9b) in the outlet region of the collection chamber (11) extend parallel to the tubular sheet (7b) and outwardly orientated in relation to the tube axis.

4. A process according to one of Claims 2 or 3,
**characterised in that** the ducts (9a, 9b) contain a filter medium.

5. A process according to one of Claims 1 to 4,
**characterised in that** the length of the filter cartridges (4c) is equal to 95 to 100 % of the length of the heat exchanger tubes (4a) and the gap width of the annular gap (8) between filter cartridge (4c) and tube (4a) lies in the range from 5 to 20 mm.

6. A process according to one of Claims 1 to 5,
**characterised in that** the heat exchanger tubes (4a) are disposed in the tightest possible geometric packing with equal spacings sufficient for / with heat carrier fluid (3a, 3b).

7. A process according to one of Claims 1 to 6,
**characterised in that** the collection chamber (11) contains baffles, which deflect the flows coming out of the heat exchanger tubes (4a) before reaching the outlet aperture (6) firstly in the direction of the periphery of the collection chamber (11).

8. A process according to one of Claims 1 to 7,
**characterised in that** the temperature difference between heat carrier fluid (3a, 3b) and polymer melt is 1 to 5°C and the outlet temperature of the polymer melt is the same as the inlet temperature ± 1 °C.

9. A process according to one of Claims 1 to 7,
**characterised in that** the temperature difference between heat carrier fluid (3a, 3b) and polymer melt is 5 to 20°C and the outlet temperature of the polymer melt differs by 2 to 10°C from the inlet temperature of the polymer melt.

10. A process according to one of Claims 1 to 9,
**characterised in that** the polymer melt is a ethylene terephthalate homopolymer or copolymer melt.

## Revendications

1. Procédé de filtration d'une masse fondue de polymère en utilisant des filtres en forme de bougie, caractérisé en ce que la masse fondue de polymère est pompée par le bas dans les tuyaux (4a) balayés par un fluide caloporteur (3a, 3b) d'un échangeur de chaleur à faisceau tubulaire (3), un filtre en forme de bougie (4c) étant disposé concentriquement dans chaque tube échangeur de chaleur (4a) grâce à une fixation démontable (4b) à l'extrémité supérieure avec formation d'une fente annulaire extérieure (8) de façon que le courant principal (10a) de la masse fondue après passage à travers les filtres en forme de bougie (4c) et qu'un courant secondaire (10b) correspondant à environ 0,03 à 3,0 % en poids du courant total sorte des tubes échangeurs de chaleur (4a) sans être passé à travers les filtres en forme de bougie (4c) par le haut, et ces courants sont réunis directement dans une chambre de rassemblement (11) se reliant à la plaque de tube supérieure (7d) et ensuite la masse fondue de polymère est transférée hors de la chambre de rassemblement (11) par une ouverture de sortie.

2. Procédé selon la revendication 1, caractérisé en ce que les liaisons démontables (4b) des filtres en forme de bougie (4c) présentent, dans la région périphérique, des canaux (9a ,9b) pour la sortie du courant secondaire (10b).

3. Procédé selon la revendication 2, caractérisé en ce que les canaux (9a, 9c) dans la région de sortie s'étendent dans la chambre de rassemblement (11) parallélement à la plaque à tube (7b) et orientés vers l'extérieur par rapport à l'axe de tube.

4. Procédé selon l'une des revendications 2 ou 3 , caractérisé en ce que les canaux (9 a, 9 b) contiennent un milieu de filtre.

5. Procédé selon l'une des revendications 1 à 4, caractérisé en ce que la longueur des filtres en forme de bougie (4c) est égale de 95 à 100 % de la longueur des tubes échangeurs de chaleur (4a) et la largeur de la fente annulaire (8) entre le filtre en forme de bougie (4c) et le tube (4a) est située dans la gamme de 5 à 20 mm.

6. Procédé selon l'une des revendications 1 à 5 , caractérisé en ce que les tubes échangeurs de chaleur (4c) sont disposés les uns par rapport aux autres à distance régulière suffisante pour le lavage par le fluide caloporteur (3a, 3b) selon un paquet géométriquement le plus dense possible.

7. Procédé selon l'une des revendications 1 à 6 , caractérisé en ce que la chambre de rassemblement (11) comprend des éléments incorporés qui dévient les courants sortant des tubes échangeurs de chaleur (4a) avant qu'ils n'atteignent l'ouverture de sortie (6) en premier lieu en direction de la périphérie de la chambre de rassemblement (11).

8. Procédé selon l'une des revendications 1 à 7 , caractérisé en ce que la différence de température entre le fluide caloporteur (3a, 3b) et la masse fondue de polymère est de 1 à 5 °C et la température de sortie de la masse de polymère fondue est égale à la température d'entrée de la masse fondue de polymère à ± 1 °C.

9. Procédé selon l'une des revendications 1 à 7, caractérisé en ce que la différence de température entre le fluide caloporteur (3a, 3b) et la masse fondue de polymère et est de 5 à 20 °C et la température de sortie de la masse de polymère fondue s'écarte de 2 à 10 °C de la température d'entrée de la masse fondue de polymère.

10. Procédé selon l'une des revendications 1 à 9, caractérisé en ce que la masse fondue de polymère est une masse fondue d'homo ou copolymère de téréphtalate d'éthylène.
